# EUROPEAN PATENT SPECIFICATION

(11) **EP 2 811 484 B1**
(45) Date of publication and mention of the grant of the patent: **03.04.2019**
(21) Application number: 14171076.4
(22) Date of filing: 04.06.2014
(51) Int. Cl.: H04M 3/42, G10L 15/26, G11B 27/034

(54) **Data processing method and electronic device thereof**
Datenverarbeitungsverfahren und elektronische Vorrichtung dafür
Procédé de traitement de données de texte et dispositif électronique correspondant

(30) Priority: 04.06.2013 KR 20130063883
(43) Date of publication of application: 10.12.2014
(73) Proprietor: Samsung Electronics Co., Ltd., Gyeonggi-do 443-742 (KR)
(72) Inventor: Choi, Woo-Jun, Gyeonggi-do (KR)
(74) Representative: Nederlandsch Octrooibureau

(56) References cited:
- EP-A2- 0 877 378
- US-A1- 2010 056 128
- US-A1- 2012 134 480

## Description

### TECHNICAL FIELD

The present disclosure relates to a method for processing data and an electronic device thereof. More particularly, the present disclosure relates to a method for processing data of a desired section in a voice file.

### BACKGROUND

With development of mobile communication technology, an electronic device has become an essential communication device. As electronic devices provide various supplementary functions, such as a camera function, data communication, a moving-image playing function, an audio playing function, a messenger, a schedule management function, an alerting function in addition to a voice call function, and the like, the electronic devices use various programs for performing the functions and thus, the number of programs installed in the electronic device greatly increases.

When a notification for the electronic device is set, there is limitation to represent a user's personality using a notification method or a notification ringtone provided by the electronic device. Recently, multimedia data, such as audio or video, is used for a notification method for the electronic device. The multimedia data is used according to various methods.

The electronic device may display frequency waveforms of voice call data or multimedia data on a touchscreen and select and output a desired voice data section through a speaker of the electronic device according to a method for performing a touch, a drag, a touch release, and the like. In this case, the electronic device performs the selection and output of a voice data section and repeats an operation several times in order to select a desired section of voice data through frequency waves displayed on the touchscreen.

The electronic device uses a part of various multimedia data stored in the memory of the electronic device as a notification ringtone for setting of a notification ringtone.

The electronic device includes voice call data generated by recording a phone conversation and selecting a desired section from the voice call recording data or multimedia data to set and use the desired section as a call ringtone. However, when the desired section is selected, there is limitation to precisely select the desired section using a method for adjusting a play time of data and selecting the section.

Therefore, a need exists for a data processing method and an electronic device thereof which obtains data of a desired section in a voice file and uses the obtained data in a notification function.

The above information is presented as background information only to assist with an understanding of the present disclosure. No determination has been made, and no assertion is made, as to whether any of the above might be applicable as prior art with regard to the present disclosure.

Patent document US2010/056128 teaches a method for managing voice data and corresponding automatically-generated text data, wherein a portion of a file containing audio is selected and used a ringtone by the device. Patent document EP0877378 teaches an audio editor that displays the waveform of an audio recording and the automatically-generated text of speech included in the recording to allow editing to be performed using word processing operations on the text alone.

### SUMMARY

Aspects of the present disclosure are to illustrate at least the above-mentioned problems and/or disadvantages and to illustrate
at least the advantages described below. Aspects of the present disclosure do not necessarily describe embodiments of the invention, which is defined by the claims. The invention provides a data processing method according to claim 1 and an electronic device according to claim 12.

An aspect of the present disclosure is to provide a data processing method and an electronic device thereof which obtains data of a desired section in a voice file and uses the obtained data in a notification function.

In accordance with an aspect of the present disclosure, a method for operating an electronic device is provided. The method includes determining a text data corresponding to voice data, displaying the text data, selecting a first section in the text data, and outputting a second section of the voice data corresponding to the first section in the text data.

In accordance with an aspect of the present disclosure, a method for operating an electronic device is provided. The method includes determining a text data corresponding to voice data, displaying the text data, selecting a first section in the text data, and outputting a second section of the voice data corresponding to the first section in the text data. In accordance with another aspect of the present disclosure, a method for operating an electronic device is provided. The method includes determining a text data corresponding to voice data, displaying the text data, selecting a first section in the text data, performing marking the second section of the voice data on frequency waveforms of the voice data and displaying the second section of the voice data corresponding to the first section, and setting the second section of the voice data as a call ringtone for the electronic device, wherein the first section is selected through a gesture.

In accordance with another aspect of the present disclosure, a method for operating an electronic device is provided. The method includes converting voice data into text data, displaying the text data, selecting a first section in the text data, and outputting voice data of a second section corresponding to the first section in the text data.

In accordance with another aspect of the present disclosure, an electronic device is provided. The electronic device includes a speaker, a touchscreen, and a processor connected to the speaker and the touchscreen, wherein the processor is configured to determine a text data corresponding to a voice data, to display the text data, to select a first section in the text data, to output a second section of the voice data corresponding to the first section in the text data, and to set the second section of the voice data as sound data of the electronic device. In accordance with another aspect of the present disclosure, the processor is further configured to perform marking on frequency waveforms of the voice data and to display the second section of the voice data when the first section is selected. In accordance with another aspect of the present disclosure, the processor is further configured to display the second section of the voice data through a popup window on a screen configured to display the text data. In accordance with another aspect of the present disclosure, the processor is further configured to select the first section by determining a start position through a touch gesture, determining a section through a drag gesture, and determining an end position through a touch release gesture, or outputting the first section in a voice format. In accordance with another aspect of the present disclosure, the processor is further configured to obtain the second section of the voice data from the voice data through time stamps of the first section.

In accordance with another aspect of the present disclosure, an electronic device is provided. The electronic device includes at least one processor, a memory, at least one program stored in the memory and configured to be executable by the at least one processor, at least one touchscreen connected to the at least one processor; and at least one speaker connected to the at least one processor, wherein the at least one program comprises an instruction for, determining a text data corresponding to voice data, displaying the text data, selecting a first section in the text data, outputting voice corresponding to a second section of the voice data corresponding to the first section in the text data, and displaying the second section of the voice data.

In accordance with another aspect of the present disclosure, an electronic device is provided. The electronic device includes a speaker, a touchscreen, and a processor connected to the speaker and the touchscreen, wherein the processor is configured to convert voice data into text data; to display the text data, to select a first section in the text data, to output voice data of a second section corresponding to the first section in the text data, and to set the voice data of the second section as sound data of the electronic device.

In accordance with another aspect of the present disclosure, an electronic device is provided. The electronic device includes at least one processor, a memory, at least one program stored in the memory and configured to be executable by the at least one processor, at least one touchscreen connected to the at least one processor, and at least one speaker connected to the at least one processor, wherein the at least one program comprises an instruction for converting voice data into text data; displaying the text data, selecting a first section in the text data, outputting voice data of a second section corresponding to the first section in the text data, and displaying the voice data of the second section.

In accordance with another aspect of the present disclosure, a method for operating an electronic device is provided. The method includes converting voice data into text data, displaying the text data, selecting a first section in the text data, performing marking on frequency waveforms of the voice data and displaying the voice data of the second section corresponding to the first section, and setting the voice data of the second section as a call ringtone for the electronic device, wherein the first section is selected through a gesture.

In accordance with another aspect of the present disclosure, a non-transitory computer readable medium for storing a computer program of instructions configured to be readable by at least one processor for instructing the at least one processor to execute a computer process for performing the method of claim 1.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a block configuration of an electronic device according to an embodiment of the present disclosure;
FIG. 2 illustrates a state of obtaining voice data during a voice call according to an embodiment of the present disclosure;
FIG. 3 illustrates a state of selecting voice data stored in an electronic device according to an embodiment of the present disclosure;
FIGS. 4A, 4B, and 4C illustrate a state in which text data is obtained from stored voice data and displayed in an electronic device according to an embodiment of the present disclosure;
FIG. 5 illustrates a method for determining a voice data section corresponding to selected text data in an electronic device according to an embodiment of the present disclosure;
FIG. 6 illustrates a state of controlling voice data corresponding to a selected text data in an electronic device according to an embodiment of the present disclosure;
FIG. 7 illustrates a state of outputting voice data corresponding to a selected text data as a call ringtone in an electronic device according to an embodiment of the present disclosure;
FIG. 8 is a flowchart illustrating a selection of voice data in an electronic device for setting a notification ringtone according to an embodiment of the present disclosure; and
FIG. 9 is a flowchart illustrating a selection of text data in an electronic device for obtaining and outputting voice data corresponding to the selected text data according to an embodiment of the present disclosure.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Various embodiments of the present disclosure will be described based on a touchscreen configured such that an electronic device may perform an input process through an input device and a display process through a display unit on one physical screen. Therefore, although the display unit and the input device are illustrated separately in the configuration of a device according to various embodiments of the present disclosure, the display unit may include the input device or the input device may include the display unit.

The present disclosure is not limited to an electronic device including the touchscreen and may be applicable to various electronic devices each of which includes one of a display unit and an input device or each of the display unit and the input device are physically separated from each other. In various embodiments of the present disclosure, a device illustrated as a touchscreen may represent a touchscreen including a touch input device and a display unit and an electronic device including a display unit, such as a display unit not including a touch input device or a display unit including an input device.

In the following description, examples of an electronic device include a mobile communication terminal, a Personal Digital Assistant (PDA), a Personal Computer (PC), a laptop computer, a smart phone, a smart TV, a netbook, a Mobile Internet Device (MID), an Ultra Mobile Personal Computer (UMPC), a tablet PC, a mobile pad, a media player, a handheld computer, a navigation device, a smart watch, a Head Mounted Display (HMD), a Motion Pictures Expert Group (MPEG-1 or MPEG-2) Audio Layer-3 (MP3) player, and the like.

In the various embodiments and the claims of the present disclosure, when it is described that one component is "coupled to" or "connected" to another component, the one component may be directly connected to another component. However, it will be understood that yet another component may exist there between. On the other hand, when it is described that one component is 'directly connected' to another component, it will be understood that yet another component does not exist there between.

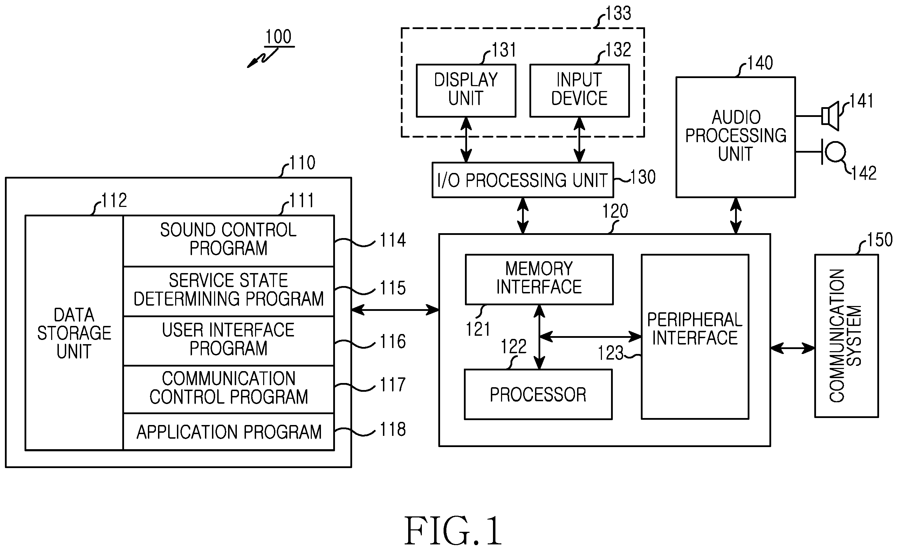

FIG. 1 illustrates a block configuration of an electronic device according to an embodiment of the present disclosure.

Referring to FIG. 1, an electronic device 100 may include a memory 110 and a processor 120. The electronic device 100 may include, as peripherals, a touchscreen 133 including an Input/Output (I/O) processing unit 130, a display unit 131, and an input device 132, an audio processing unit 140, a communication system 150, and other peripherals.

Respective components will be described below.

The memory 110 may include a program storage unit 111 for storing a program for controlling an operation of the electronic device 100 and a data storage unit 112 for storing data generated during the execution of a program, and may store data generated by the program according to the operation of the processor 120.

The data storage unit 112 may store information about the functions and purposes of programs, keywords, Identification (ID) codes, peripherals, and the like, of the electronic device 100 which may be used by programs when the electronic device 100 processes data of the programs.

For example, the electronic device 100 may store text data when voice of multimedia data is converted into text and partial voice data when a text section is selected and a partial voice data corresponding to the selected text section is determined.

The program storage unit 111 may include a sound control program 114, a service state determining program 115, a user interface program 116, a communication control program 117, and at least one application program 118. The programs stored in the program storage unit 111 may be configured by a connection of instructions and may be expressed as an instruction set.

The sound control program 114 may include or works in conjunction with a Speech To Text (STT) converter software for converting voice information included in multimedia data including voice call data, audio and video into text (or extract) to obtain text data and may perform operation in conjunction with an STT conversion hardware.

The sound control program 114 may obtain text data from voice data selected through the STT conversion software or the STT conversion hardware and synchronizes the time stamp of voice information included in the voice data with the time stamp of the text data.

The sound control program 114 may display the text data corresponding to frequency waveforms according to the time stamp of the voice information included in the voice data and/or the voice information on an input/output device (touch screen) 133 and select a certain section in the text data.

The sound control program 114 may determine the voice information corresponding to the selected section of the text data from the voice data and output the voice information included in the voice data through a speaker of the electronic device 100.

The sound control program 114 may set the selected voice data as sound data to be used by the electronic device 100, such as a call ringtone, a text message notification ringtone, a Social Networking Service (SNS) notification ringtone, and the like, for the electronic device 100.

The service state determining program 115 may include at least one software component for determining a state of a service provided by a program or component devices of the electronic device 100.

The User Interface (UI) program 116 may include at least one command or software component for providing a user interface in the electronic device 100.

For example, the user interface program 116 outputs characters or sound corresponding to codes, such as a standard character encoding or a character set used in the electronic device 100 through the input/output device 133 or a speaker 141 of the electronic device 100.

The communication control program 117 may include at least one software component for controlling communication with at least one counterpart electronic device using the communication system 150.

For example, the communication control program 117 may search for a counterpart electronic device for communication connection. When the counterpart electronic device for communication connection is found, the communication control program 117 may set a connection for communication with the counterpart electronic device. The communication control program 117 determines the performance of the counterpart (the second) electronic device connected to the electronic device and performs a session establishment process to transmit and receive data to and from the counterpart electronic device through the communication system 150.

The application program 118 may include a software component for at least one application program installed in the memory 110 of the electronic device 100.

The memory 110 included in the electronic device 100 may be configured in plurality. According to an embodiment of the present disclosure, the memory 110 may perform the function of the program storage unit 111 or the data storage unit 112 according to the use of the memory 110 or both functions thereof. The memory 110 may be configured such that the internal area thereof is not physically divided due to the characteristics of the electronic device 100.

The processor 120 may include a memory interface 121, at least one processor 122, and a peripheral interface 123. The memory interface 121, the at least one processor 122 and the peripheral interface 123 which are included in the processor 120 may be integrated into at least one circuit or be implemented as separate components.

The memory interface 121 may control access to the memory 110 of components, such as the at least one processor 122 or the peripheral interface 123.

The peripheral interface 123 may control connections of the input/output peripherals of the electronic device 100 to the at least one processor 122 and the memory interface 121.

The at least one processor 122 may enable the electronic device 100 to provide various multimedia services using at least one software program, may enable the I/O processing unit 130 to display the UI operation of the electronic device 100 on the display unit 131 to enable a user to see the UI operation, and may enable the input device 132 to provide a service for receiving an instruction from the outside of the electronic device 100. The at least one processor 122 may execute at least one program stored in the memory 110 and provide a service corresponding to the program.

The audio processing unit 140 may provide an audio interface between a user and the electronic device 100 through the speaker 141 and a microphone 142.

The communication system 150 performs a communication function. The communication system 150 may perform communication with a counterpart electronic device using at least one of a mobile communication through a base station, an Infrared Data Association (IrDA) infrared communication, Bluetooth, Bluetooth Low Energy (BLE), Wi-Fi, a Near Field Communication (NFC) wireless communication, a near-field wireless communication, such as ZigBee, a wireless LAN communication, a wired communication, and the like.

The I/O processing unit 130 may provide an interface between the input/output device 133, such as the display unit 131 and the input device 132, and the peripheral interface 123.

The input device 132 may provide input data generated by the selection of the user to the processor 120 through the I/O processing unit 130.

For example, the input device 132 may be configured by a control button or a keypad in order to receive data for control from the outside of the electronic device 100.

In addition, the input device 132 may include the display unit 131, such as a touchscreen on which input and output may be performed. In this case, the input device 132 used for the touchscreen may use one or more of a capacitive scheme, a resistive (i.e., a pressure detective) method, an infrared method, an electron induction method, an ultrasound method, and the like.

In addition, an input method in the input device 132 of the touchscreen may include a method for performing input by directly touching the touchscreen 133 and a method for inputting an instruction when an input object is located within a certain distance from the touchscreen 133. Terms like hovering, a floating touch, an indirect touch, a near touch, a non-contact input, and the like, may be used.

The display unit 131 may receive state information of the electronic device 100, characters received from the outside, moving pictures, or still pictures from the processor 120, configure a UI operation, and display the same through the display unit 131.

The I/O device 133 is a device in which the input device 132 is physically combined with the display unit 131 and may be a touchscreen which enables a user to touch a screen configuration displayed on the display unit 131 to input an instruction for operation of the electronic device 100.

Since the touchscreen may perform both the function of the display unit 131 for displaying a UI operation of the electronic device 100 and the function of the input device 132 for inputting an external command to the electronic device 100, the touchscreen 133 may be configured by including the display unit 131 and the input device 132.

In the description of the present disclosure, display on the electronic device 100 or output to the electronic device 100 may be terms representing that moving images, still images, or a Graphical Unit Interface (GUI) operation are displayed on the touchscreen 133 of the electronic device 100 or signal tones or voice audio is output through the speaker 141. In the following description, terms "display" and "output" may be used in the same meaning and, if necessary, the terms are described separately.

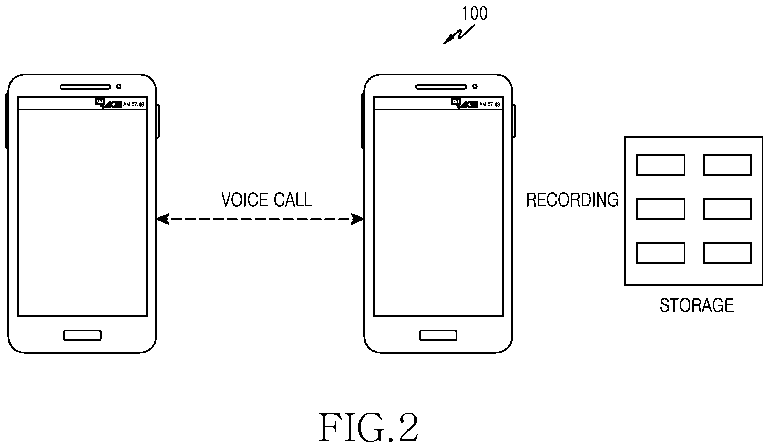

FIG. 2 illustrates a state of obtaining voice data during a voice call according to an embodiment of the present disclosure.

Referring to FIG. 2, the electronic device 100 may transmit and receive analog or digital voice information through a wireless or a wired communication. The electronic device 100 may transmit and receive data including voice information according to a Circuit Switched (CS) scheme or a packet switched scheme when the voice information is transmitted to or received from a second electronic device (not illustrated).

When the data is transmitted or received through a circuit switched scheme, the electronic device 100 may set a communication circuit between a transmitter and a receiver to enable data switching there between. The electronic device 100 may provide a dedicated communication path with a second electronic device (not illustrated) to communicate with the electronic device 100 and the dedicated communication path may be configured by a link connecting respective nodes continuously. The respective links are connected through one channel and are used when data which is relatively continuous, such as voice, is transmitted or received. A method for performing transmission through a set communication circuit during data transmission and reception may be suitable to a case where there is amount of information and a case where a long message is transmitted, such as a file transmission. A time division circuit switching system employs a digital switching technology and a multiplexing technology for a pulse code modulation in a digital communication circuit, thereby being greatly efficient for high-speed data transmission of a high quality.

In the Packet Switched (PS) scheme, the electronic device 100 stores a data transmission unit having a certain length and a packet format in a transmitting-side packet switching system and selects an appropriate communication path according to an address of a receiver (e.g., a second electronic device) to transmit the same to a receiving-side packet switching system. In the PS scheme, data is transmitted and received by the electronic device 100 in data block units with a short length called a packet. In general, a length of the packet is limited to be approximately 1024 bytes. Each packet is comprised of a portion indicating user data and a portion indicating control information of a packet. The control information of the packet may include information used to set a path of the packet within a network such that the packet is delivered to the second electronic device. When the packets are received by each node via the transmission path, the packets are first stored and then transmitted to the next node. Such storage process until the packet is delivered to the receiving side and the transmission process to the next node are repeated.

The electronic device 100 may transmit and receive voice data and/or image data to and/or from the second electronic device through a circuit switching method or a packet switching method. Audio data transmitted and received through a packet switching method as in VoLTE capable of providing a voice call on LTE may include time stamps representing reference times over a time period for a voice section and time stamp information may be stored in the data header of a packet. The electronic device 100 may store voice data and/or image data (i.e., voice call data or video call data) in the memory 110. The electronic device 100 may convert voice data included in data into text corresponding to time stamps of the voice data through an STT conversion program for converting voice data to text corresponding to time stamps.

The electronic device 100 may convert not only call data transmitted and received through a packet switching method but also voice data include in multimedia data having MP3, OGG, WAV, WMA, FLAC, ALE or ALAC codec or format to text corresponding thereto.

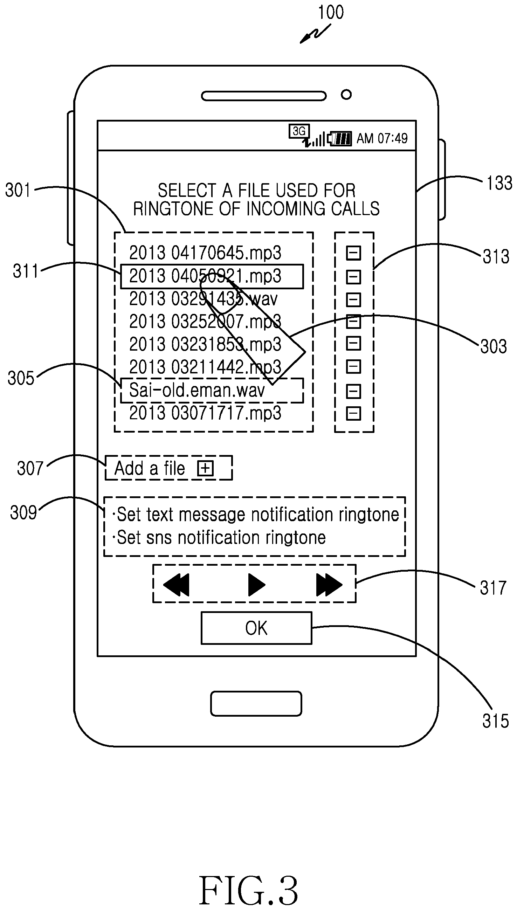

FIG. 3 illustrates a state of selecting voice data stored in an electronic device according to an embodiment of the present disclosure.

Referring to FIG. 3, the electronic device 100 may select a part of voice call data or audio data (as indicated by reference numeral 301) stored in the memory 110, which is generated during communication with a second electronic device, and set the selected part as a sound which may be output from the electronic device 100, like a call ringtone, a text message notification ringtone, an SNS notification ringtone for the electronic device 100, and the like. In addition, text data generated through an STT conversion program may be used to select the sound of the electronic device 100.

The electronic device 100 may select a part of audio data, such as voice recording data or voice call data during communication with a second electronic device (not illustrated), which are stored in the memory 110 through the sound control program 114 and output the part selected by the electronic device 100 through the speaker 141.

For example, the electronic device 100 may display selectable audio data on the display unit (touchscreen) 133 which is displaying a UI operation of the sound control program 114 as indicated by reference numeral 311. The electronic device 100 may display not only the voice call data generated during communication with the second electronic device but also music data 305 stored in the memory 110 and provide a menu 307 for adding audio data which is included in the memory 110 of the electronic device 100 but is not displayed on the touchscreen 133. In addition, a menu 313 for releasing display of the audio data displayed on the touchscreen 133 may be provided. In addition, the electronic device 100 may select a part of audio data stored in the memory 110 and set the selected part as a call ringtone. The electronic device 100 may provide a menu 309 for setting the selected part as a text message notification ringtone or an SNS notification ringtone.

The electronic device 100 may select voice call data or multimedia data, which is desired to be set as an alarm sound for a text message or an SNS alarm sound, and provide functions 317 for playing, fast-forwarding, and rewinding the voice call data or the multimedia data through icons for outputting the contents thereof.

When the electronic device 100 selects desired data and presses an OK button 315, the electronic device 100 may obtain text data from the selected data through a gesture (e.g., touching an icon) or a motion.

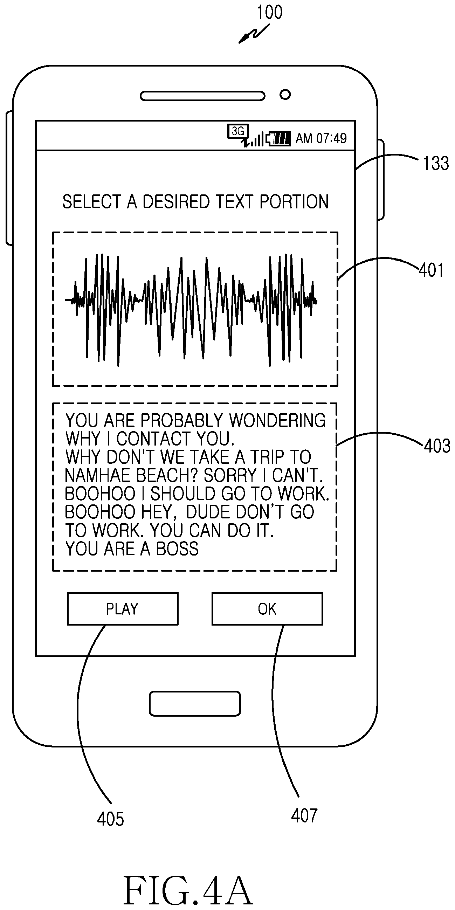

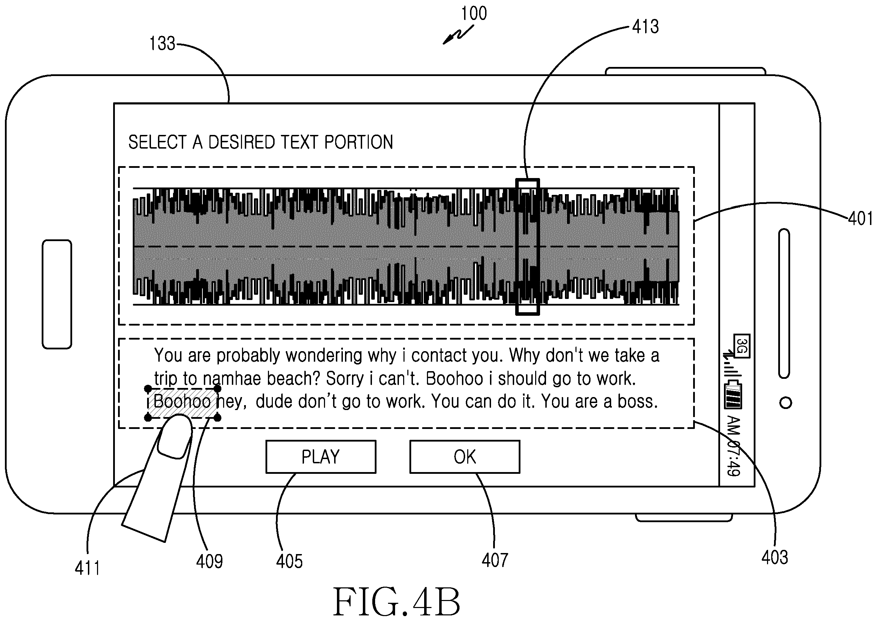

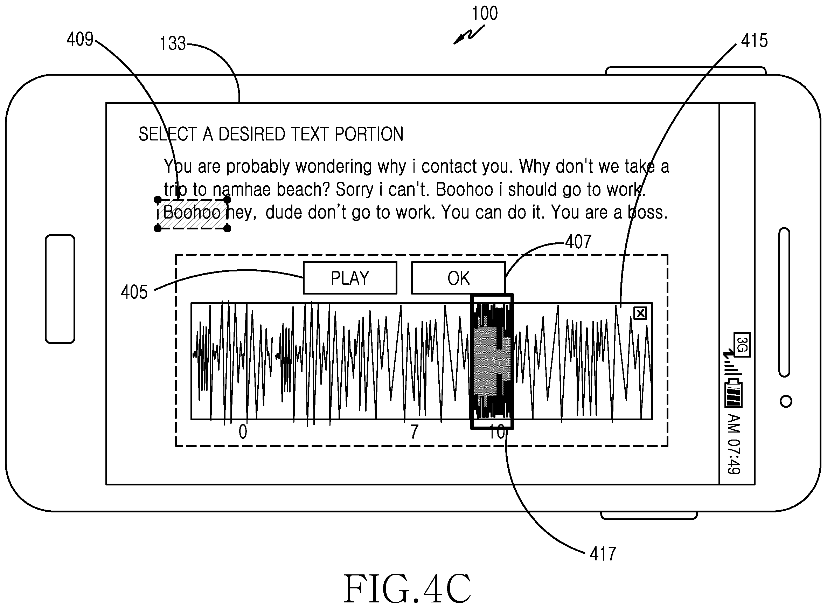

FIGS. 4A, 4B, and 4C illustrate a state in which text data is obtained from stored voice data and displayed in an electronic device according to an embodiment of the present disclosure.

The electronic device 100 may display text data, which is obtained using a method for performing conversion or extraction on voice data in audio data through an STT conversion software or an STT conversion hardware, on the touchscreen 133 of the electronic device 100 and determine partial voice data of the voice data corresponding to a selected part of the text data by selecting the part of the text data.

Referring to FIG. 4A, the electronic device 100 may enable a user to select a desired part by displaying text data 403, which is obtained from frequency waveforms 401 of voice call data or/and voice data of the voice call data through the sound control program 114, on the touchscreen 133.

For example, the electronic device 100 may perform conversion into or extraction of text data corresponding to time stamps from voice data included in the voice call data or the multimedia data using a method for performing conversion or extraction of voice data in audio data using an STT conversion software or an STT conversion hardware to obtain the text data and display the obtained text data on the touchscreen 133 of the electronic device 100. The electronic device 100 may select partial text data from the displayed text data 403, output partial voice data by the speaker 141 of the electronic device 100 through a play icon 405, a gesture, or a motion, and determine partial voice data corresponding to the partial text data from the voice data through an OK icon 407, a gesture, or a motion.

Referring to FIG. 4B, partial text data 409 may be selected using a method for performing a touch, a drag and a touch release on the touchscreen that is displaying text data 403 obtained from frequency waveforms 401 of voice call data displayed on the electronic device 100 or/and voice data of the voice call data.

For example, the electronic device 100 may determine a selection start position when a touch occurs on the touchscreen 133 that is displaying the text data 403. When a drag is performed while the touch is being maintained, an end position is moveable and a desired range may be determined. Partial text data, such as 'boohoo' 409 of FIG. 4B, may be selected by moving the end position and the selected partial text data may be determined by performing a touch release on an object 411 touched at the end position. In addition, partial text data may be selected through a multi-touch for performing a plurality of touches for a reference time, voice input, or a gesture or motion in addition to a method for performing a touch, a drag and a touch release on the touchscreen 133 of the electronic device 100.

The electronic device 100 may determine partial voice data of voice data corresponding to the selected partial text data through the time stamps of the selected partial text data and the time stamps of the voice call data.

The electronic device 100 may provide the menu 405 for outputting the determined partial voice data. The electronic device 100 may output the determined partial voice data by the speaker 141 through an action of touching the play icon 405 displayed on the touchscreen.

The electronic device 100 may store the determined partial voice data. Although not illustrated, the electronic device may provide a text input area for naming of partial voice data for storage when the OK icon 407 is touched, and store the determined partial voice data according to input text information. In addition, the electronic device may perform voice input for naming of the determined partial voice data in addition to the method for providing the text input area for naming of the determined partial voice data for storage.

The electronic device 100 may set the stored partial voice data as a call ringtone, a text message notification ringtone, an SNS notification ringtone for the electronic device 100, and the like.

Referring to FIG. 4C, the electronic device may display frequency waveforms of voice data corresponding to text data when a text section is selected from the text data, highlight the frequency waveforms of partial voice data corresponding to the selected partial text data and voice information, and display the same on the touchscreen 133.

For example, the electronic device 100 may not display the frequency waveforms of the voice data corresponding to the text data as illustrated in FIG. 4C. Therefore, the electronic device 100 may display 415 the frequency waveforms of the voice data on an area of the touchscreen 133 using a popup method and indicate 417 a voice information section corresponding to the selected text data on the frequency waveforms when the text section of the text data is selected through the touchscreen 133.

The electronic device 100 may display the voice information section corresponding to the selected text section when the frequency waveforms of the voice data are displayed and further display time stamps corresponding to the voice information section.

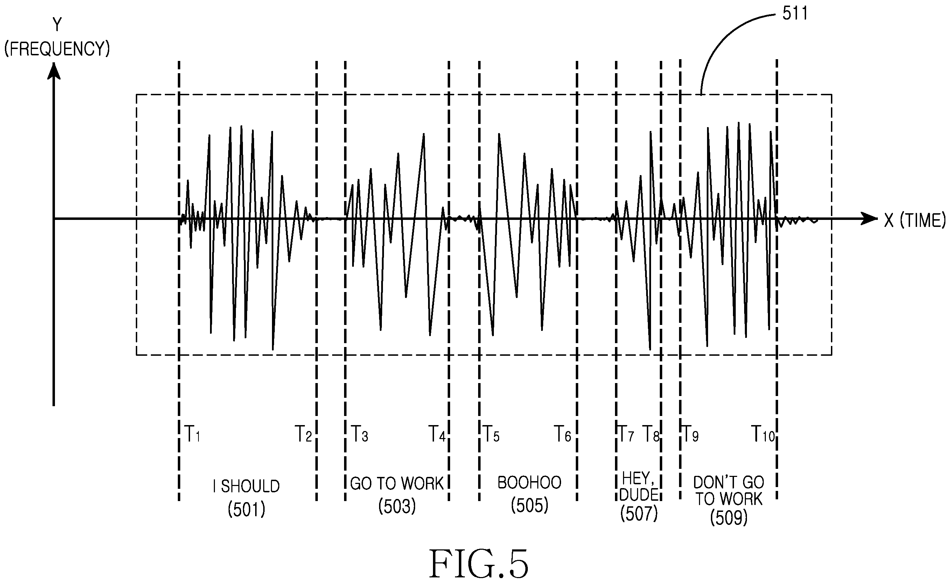

FIG. 5 illustrates a method for determining a voice data section corresponding to selected text data in an electronic device according to an embodiment of the present disclosure.

The electronic device 100 may obtain text data corresponding to a selected range of voice call data. The electronic device 100 may obtain text data corresponding to frequency waveforms of voice data through an STT conversion software or an STT conversion hardware and include the time stamps of the voice data in the text data obtained based on the voice data.

The voice data may represent voice information along a frequency axis and a time axis as illustrated in FIG. 5. The voice information may be expressed as a change in frequency over time and reference units of time may be represented as time stamps.

Referring to FIG. 5, the electronic device may obtain text data "I should go to work. Boohoo. Hey, dude don't go to work" corresponding to frequency waveforms 511 of voice data. The frequency waveforms of the voice data may include time stamps for all sections. When the text data corresponding to the frequency waveforms of the voice data is obtained, the electronic device 100 may synchronize a text of the text data corresponding to the positions of a partial frequency range of the frequency waveforms with time stamps. The text data corresponding to a range T1-T2 of the frequency waveforms may be "I should" 501. The electronic device 100 may set a start time stamp of "I should" to T1 and an end time stamp to T2 and store the same in the text data as time stamp information. Similarly, the electronic device 100 may store start time stamps or/and end time stamps for "go to work" 503 corresponding to T3-T4, "boohoo" 505, "hey dude" 507 corresponding to T7-T8, and "don't go to work" 509 corresponding to T9-T10 in the text data as time stamp information.

In addition, the electronic device 100 may determine respective letters as time stamp information and store the same in the text data in addition to a method for storing starts and ends of respective words as time stamp information as indicated by the embodiment of FIG. 5.

As to "I should" 501, respective letters "I", "s", "h", "o", "u", "l", or "d" each may include a start time stamp and/or an end time stamp, and may include a plurality of time stamps included in the voice data between the start time stamp and the end time stamp. Therefore, the electronic device 100 may synchronize time stamps included in voice data with text data corresponding to frequency waveforms and store the same.

The electronic device 100 may obtain relevant text data from the voice data through an STT conversion program or an STT conversion module and use a method for synchronizing the time stamps of the voice data with the time stamps of the text data as a method for storing the time stamps of the voice data in the text data.

In addition, the electronic device 100 may process data in a packet unit and may include the packets by dividing the voice data. The voice information may be represented in change of frequency corresponding to change in time and time stamps corresponding to the voice information may be indicated in the voice information. The time stamps and voice information data corresponding to the time stamps may be included in the header of a packet.

The electronic device 100 may obtain partial voice data corresponding to selected partial text data.

Referring to FIG. 5, the electronic device 100 may select "boohoo" 505 from the text data displayed on the touchscreen 133. The electronic device 100 may identify the time stamps T5-T6 of the selected partial text data "boohoo" 505. The electronic device 100 may identify the time stamps T5-T6 of the voice data and obtain partial voice data including voice information "boohoo" corresponding to a time interval T5-T6.

In this manner, referring to FIG. 4B or FIG. 4C, the electronic device 100 may play the partial voice data obtained from the selected partial text data through the play icon 405 (as illustrated in FIG. 4B or FIG. 4C) displayed on the touchscreen 133 or a gesture or motion of the electronic device 100 and output voice information "boohoo" included in the partial voice data through the speaker 141.

The electronic device 100 may store the obtained partial voice data in the memory 110 of the electronic device 100 and set the obtained partial voice data as a call ringtone, a text message notification ringtone, an SNS notification ringtone, and the like.

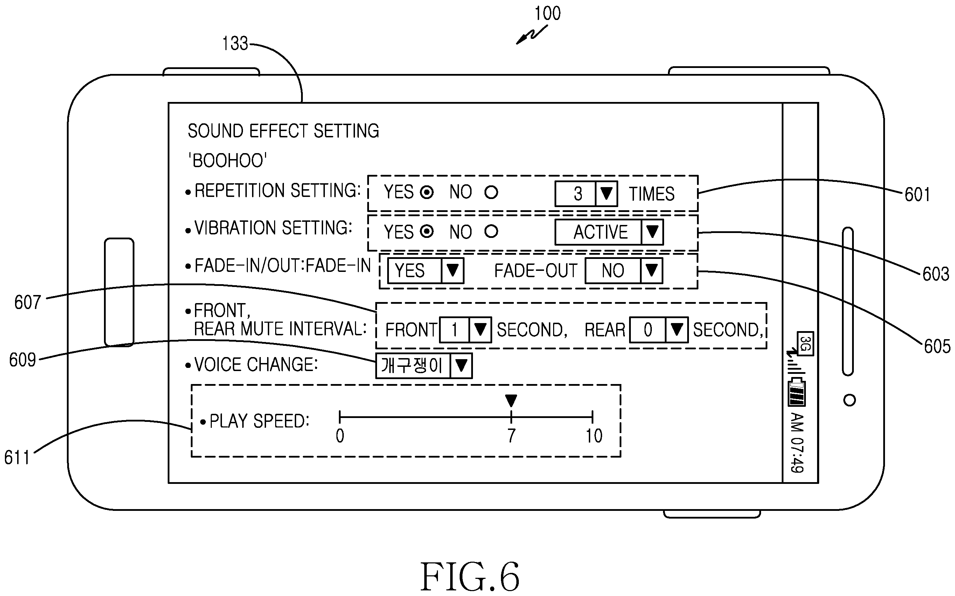

FIG. 6 illustrates a state of controlling voice data corresponding to a selected text data in an electronic device according to an embodiment of the present disclosure.

Referring to FIG. 6, the electronic device 100 may apply various sound effects to obtained partial voice data.

For example, the electronic device 100 may set the obtained partial voice data as a call ringtone, a text message notification ringtone, an SNS notification ringtone for the electronic device 100, and the like. When the set sound is output, the electronic device 100 may determine a number of times the partial voice data is output. Referring to reference numeral 601, the electronic device 100 may determine whether the partial voice data is repeatedly output and provide a menu for selecting or inputting a number of repetition times.

As another example, the electronic device 100 may determine whether the electronic device 100 generates vibration when the partial voice data is output as a sound indicated by reference numeral 603. When the electronic device 100 generates vibration, the electronic device 100 may provide a menu (i.e., an active mode of 603) for selecting various effects, such as a vibration pattern, and the like.

As another example, the electronic device 100 may provide a menu for determining whether to perform a fade-in effect or a fade-out effect on the output partial voice data when the partial voice data is output as a sound as indicated by reference numeral 605.

As another example, the electronic device 100 may set a mute interval before or after the partial voice data which may be output through the speaker 141. When front and rear mute intervals are set to 1 second and 0 second as indicated by reference numeral 607, the electronic device 100 may set a mute interval of 1 second before the start time stamp of the partial voice data "boohoo" and a mute interval of 0 second after the end time stamp thereof through the time stamps of the partial voice data (voice data "boohoo" 417) corresponding to the partial text data "boohoo" (409 of FIG. 4B or FIG. 4C). Therefore, when the partial voice data "boohoo" to which an effect has been applied is output through the speaker 141, the partial voice data "boohoo" may be output after 1 second has passed and the output of the voice data may be terminated after the output of "boohoo". When the partial voice data "boohoo" is output several times, the electronic device 100 may output the partial voice data "boohoo" when 1 second has passed after output is started. Thereafter, when 1 second has passed, the partial voice data "boohoo" may be again output.

In another example, the electronic device 100 may apply a voice change effect to the partial voice data.

When a mischievous voice is selected for the voice change effect as indicated by reference numeral 609, the frequency or pitch of the partial voice data "boohoo" may be changed and the changed partial voice data "boohoo" may be output through the speaker 141.

In another example, the electronic device 100 may apply an output speed change effect to the partial voice data.

When the play speed of the partial voice data "boohoo" is set to 7 as indicated by reference numeral 611, the partial voice data "boohoo" may be output at a speed higher than a normal speed 7 times through the speaker 141 of the electronic device 100.

The electronic device 100 may provide a menu for applying various effects for changing voice data in addition to the effects described with reference to FIG. 4C when the determined partial voice data is output.

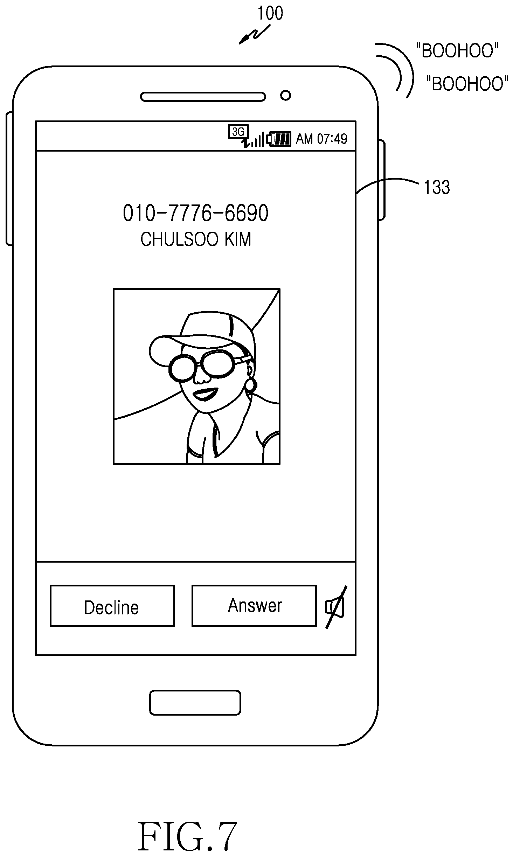

FIG. 7 illustrates a state of outputting voice data corresponding to a selected text data as a call ringtone in an electronic device according to an embodiment of the present disclosure.

The electronic device 100 may output partial voice data determined from voice call data or multimedia data through the speaker 141 and set the partial voice data as a call ringtone, a text message notification ringtone, an SNS notification ringtone, and the like.

For example, the electronic device 100 may generate the voice call data by recording phone conversation with someone, for example, Chulsoo KIM. The electronic device 100 may determine partial text data of text data displayed on the touchscreen 133 and determine partial voice data corresponding to the selected partial text data from voice data through the time stamps of the selected partial text data as illustrated in FIGS. 4A, 4B, and 4C. The electronic device 100 may apply various effects to the partial voice data additionally and set the partial voice data as a call ringtone, a text message notification ringtone, an SNS notification ringtone for the electronic device 100, and the like, as illustrated in FIG. 6.

Referring to FIG. 7, the electronic device 100 may set the partial voice data as a ringtone for a case where a second electronic device owned by Chulsoo Kim receives a request for call connection from the electronic device 100 or may output the set partial voice data "boohoo" through the speaker 141 when the second electronic device owned by Chulsoo Kim request a call connection from the electronic device 100.

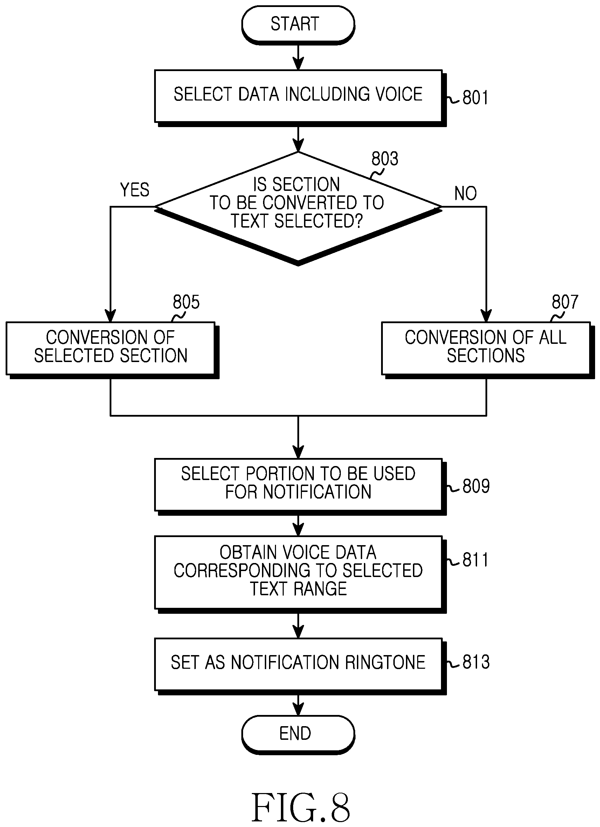

FIG. 8 is a flowchart illustrating a selection of data in an electronic device for setting a notification ringtone according to an embodiment of the present disclosure.

The electronic device 100 may select voice call data or multimedia data each including voice data from the memory 110 and select a voice data section to be converted into text on the touchscreen 133 that displays frequency waveforms of the voice call data or the multimedia data. The electronic device 100 may obtain text data corresponding to a selected section or all sections according to selection of the section for conversion and select desired partial text data from the text data. The electronic device 100 may determine partial voice data corresponding to the selected partial text data and output the partial voice data. The electronic device 100 may set the determined partial voice data as sound data for the electronic device.

Referring to FIG. 8, operations of the electronic device will be described below.

In operation 801, the electronic device 100 may determine voice call data or multimedia data from the memory 110. The electronic device 100 may identify voice data in the selected voice call data or the selected multimedia data and obtain text data from the voice data using an STT conversion software or an STT conversion hardware. Therefore, the selected voice call data or the selected multimedia data may be data including voice data.

Referring back to FIG. 3, the electronic device 100 may display a list of voice call data or a list of multimedia data stored in the memory 110 on the touchscreen 133 in order for the electronic device 100 or the sound control program 114 included in the electronic device 100 to perform conversion into (or extraction of) text data from the voice data of the voice call data or the multimedia data. The electronic device 100 may select desired data and perform an operation of obtaining the text data from the voice data which may be included in the data.

In operation 803, it is determined whether a section (or a range), from which the text data is desired to be obtained, in the voice data has been selected. The electronic device 100 may display frequency waveforms of the selected voice call data or the selected multimedia data on the touchscreen 133 of the electronic device 100. The displayed frequency waveforms of the voice call data or the multimedia data may include frequency waveforms of the voice data. According to a method of the electronic device 100, the section from which the text data is desired to be obtained, in the frequency waveforms, is displayed on the touchscreen 133. A method for selecting the section may determine a start position of the section by touching the touchscreen of the electronic device 100. The electronic device 100 may determine a desired section by performing a drag while maintaining the touch after determining the start position of the section through the touch. The electronic device 100 may determine an end position of the section by performing a touch release after determining the desired section.

Although not illustrated, the electronic device 100 may display the frequency waveforms of the voice call data or the multimedia data on the touchscreen 133 and select a section of the voice data from which the text data is desired to be obtained in the frequency waveforms.

For example, the electronic device 100 may determine a selection start position for the section by receiving a touch on a desired part of the frequency waveforms displayed on the touchscreen 133. The electronic device 100 may determine the selected section of the voice data from the start position by receiving a drag with the touch maintained on the touchscreen 133. The electronic device 100 may determine the section of the voice data from which the text data is desired to be obtained and determine an end position by receiving touch-release operation. The electronic device 100 may determine the section of the voice data from which the text data is desired to be obtained by receiving the touch-release operation.

According to the above-described method, the electronic device may select a desired section of voice data from which the text data is desired to be obtained through the frequency waveforms of the voice data displayed on the touchscreen 133.

If it is determined in operation 803 that a section in the voice data has been selected, the electronic device 100 converts the selected section of voice data into text data in operation 805. On the other hand, if it is determined in operation 803 that a section in the voice data has not been selected, the electronic device 100 converts the entire section of the voice data into text data in operation 807.

In operation 805, the electronic device 100 may obtain text data corresponding to the selected section of the voice data using an STT conversion program or an STT module. The electronic device 100 may identify positions of the time stamps of the text data corresponding to time stamps included in the partial voice data on the obtained text data and perform synchronization.

In operation 807, the electronic device 100 may obtain text data corresponding to all sections of the voice data using an STT conversion program or an STT module. The electronic device 100 may identify positions of the time stamps of the text data corresponding to time stamps included in the partial voice data on the obtained text data and perform synchronization.

In operation 805 and operation 807, the electronic device 100 may use one or more of various methods generally used to synchronize time stamps of the voice data with time stamps of the text data by an STT conversion software or an STT conversion hardware in order to synchronize the time stamps of the voice data with the time stamps of the text data.

In operation 809, the electronic device 100 may display the obtained text data on the touchscreen 133 and select a desired part of the text data. The electronic device 100 may select partial text data through the text data obtained from the voice data. Referring to FIG. 4B, the electronic device may display the text data obtained from the voice call data on the touchscreen 133, and may further display frequency waveforms of the voice call data. The electronic device 100 may determine a start position by receiving a touch on a desired position in the text data and select a section by receiving a drag with the touch maintained. The electronic device 100 may determine an end position of the section by receiving a touch-release operation and determine the determined section as partial text data through a drag between the start position and the end position.

In operation 811, the electronic device 100 may determine partial voice data corresponding to selected partial text data. The electronic device 100 may obtain partial voice data corresponding to the selected partial text section through a method for performing matching on time stamps.

In operation 813, the electronic device 100 may set the determined partial voice data as a sound to be used by the electronic device 100, such as a call ringtone, a text message notification ringtone, an SNS notification ringtone, and the like, for the electronic device 100.

When the text data obtained from the voice call data and the frequency waveforms of the voice call data are displayed on the touchscreen 133 of the electronic device 100 at the time of displaying the section of the determined partial voice data, as illustrated in FIG. 4B, the electronic device 100 may display the time stamp section of the partial voice data corresponding to the selected partial text data on the frequency waveforms of the voice data.

As another example, when the text data obtained from the voice call data is displayed on the touchscreen 133 of the electronic device 100, as illustrated in FIG. 4C, a screen may display the time stamp range of the partial voice data corresponding to the selected partial text data on the frequency waveforms of the voice data.

In addition, the partial voice data corresponding to the selected partial text data may be output through the speaker 141.

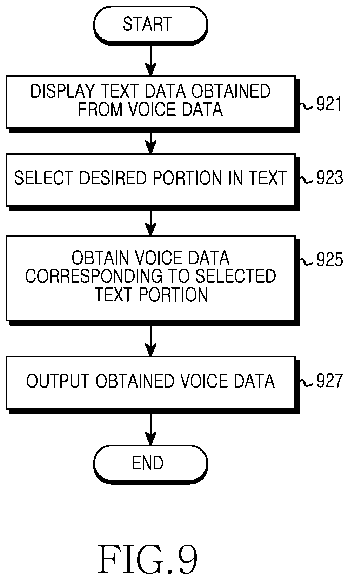

FIG. 9 is a flowchart illustrating a selection of text data in an electronic device for obtaining and outputting voice data corresponding to the selected text data according to an embodiment of the present disclosure.

The electronic device 100 may obtain text data from voice call data or multimedia data and display the same. In addition, the electronic device 100 may select desired partial text data from the text data, obtain partial voice data corresponding to the selected partial text data, and output the obtained partial voice data.

Referring to FIG. 9, operations of the electronic device will be described.

In operation 921, the electronic device 100 may convert voice data to text corresponding to time stamps and display the text on the electronic device 100.

For example, the electronic device may perform conversion into or extraction of text data corresponding to time stamps of voice information from voice call data or multimedia data each of which include the voice information. Conversion (or extraction) method may be a general method for obtaining the text data corresponding to the voice information using an STT conversion software or an STT conversion hardware, which is included in the electronic device 100), or an STT conversion hardware connectable to the electronic device 100.

Referring back to FIG. 3, when the voice call data 311 is selected (as indicated by reference numeral 303) from voice call data or multimedia data stored in the memory 110 of the electronic device 100 as indicated by reference numeral 301, the electronic device 100 may obtain the text data according to the method as described with reference to FIG. 5 using an STT conversion software, an STT conversion hardware, or an STT conversion hardware connectable to the electronic device 100 or a general method for obtaining the text data from the voice data.

In addition, the electronic device 100 may record time stamps corresponding to time positions of the obtained text data according to the time stamps of the voice information included in the voice data.

Referring back to FIG. 5, when the frequency waveforms of voice information "boohoo" start at a start position (may be a time stamp of the voice data) T5 and end at T6 in frequency waveforms 511, the electronic device 100 may synchronize the time information (may be a time stamp of the obtained text data) of a first letter "b" of letters "boohoo" 505 included in the obtained text data with T5 and the time information of a final letter "o" with T6.

In addition, when the frequency waveforms of the first letter "b" start at T5 and end at T5-1 in the frequency waveforms 511 of the voice information "boohoo", the electronic device 100 may synchronize the start time information of the first letter "b" of "boohoo" 505 included in the obtained text data with T5 and the end time information thereof with T6. Using the above-described method, a word or/and a letter included in the text data may represent a time stamp corresponding to the voice information of relevant voice data.

The electronic device 100 may display the obtained text data on the touchscreen 133 of the electronic device 100.

Referring back to FIG. 4B, the electronic device may display frequency waveforms over time of the voice data and text data 403 corresponding to the voice information included in the voice data together on one screen.

Referring back to FIG. 4C, the text data corresponding to the voice information included in the voice data may be displayed.

In operation 923, the electronic device 100 may select a desired section in the text data acquired in operation 921.

The electronic device 100 may select the desired section in the text data using a method for performing a touch, a drag, a touch release which is a general method for selecting a section using a touch, and the like. As another method, the electronic device 100 may perform a voice input of an instruction to an input device for receiving a sound of the microphone 142 to select a section.

As described with reference to FIG. 4B, the electronic device 100 may display the text data obtained from the voice data on the touchscreen 133 of the electronic device and select a section by selecting "boohoo" through a general method for performing a touch, a drag, a touch release, and the like, as a selection method.

When a desired part is touched two times for a certain time period for selection in the electronic device 100, a word located at a touched region may be selected. It may be previously determined that a section is selected through a method for selecting a plurality of words within a range including a word located at a touched region. In addition, the section may be selected by performing a gesture, such as two times of tap, three times of tap, a touch with a drag, and the like.

When the electronic device 100 selects "boohoo" 409 (as illustrated in FIG. 4B) of the text data 403 (as illustrated in FIG. 4B), a corresponding section may be selected by receiving a voice instruction through the microphone 142 as indicated by reference numeral 413. When a plurality of "boohoo" sections are include in the text data, the electronic device 100 may select a plurality of "boohoo" sections and may select one thereof by receiving a voice instruction repeatedly or by performing a gesture or motion.

In operation 925, the electronic device 100 may obtain partial voice data corresponding to a selected partial text section.

The voice information of the voice data and the text data obtained from the voice data may be synchronized with time stamps along a time axis. Therefore, when a section including a word or a letter is selected in the text data, voice data including voice information corresponding to relevant time stamps may be obtained.

Referring back to FIG. 4B, when "boohoo" 409 is selected 411 in the text data 403 displayed on the touchscreen 133 of the electronic device 100, the electronic device 100 may identify voice information corresponding to the time stamps of "boohoo" 409 in the voice data and mark 413 a frequency waveform portion for the voice information in frequency waveforms 401 of the voice data which are displayed on the touchscreen to display the same. The electronic device 100 may obtain partial voice data corresponding to the marked frequency waveform portion.

Referring back to FIG. 4C, the electronic device 100 may display frequency waveforms 415 along a time axis of relevant voice data on the touchscreen 133 through a popup method when "boohoo" 409 is selected on the touchscreen 133 that displays the text data. In addition, frequency waveforms representing the time stamp range of voice information "boohoo" corresponding to the time stamps of the selected partial text data "boohoo" which are selected in the displayed frequency waveforms may be displayed as indicated by reference numeral 417.

In operation 927, the electronic device 100 may output the obtained partial voice data "boohoo" through the speaker 141. In addition, the electronic device 100 may set the partial voice data as a sound to be used by the electronic device 100, such as a call ringtone, a text message notification ringtone, an SNS notification ringtone, and the like, for the electronic device 100.

Referring back to FIG. 7, the electronic device may set the obtained partial voice data as a call ringtone for the electronic device 100. The electronic device 100 may set partial voice data "boohoo" as a call ringtone when a request for a call connection is received from a second electronic device. In addition, when a call ringtone is set to "boohoo", various sound effects may be applied thereto as illustrated in FIG. 6. The electronic device 100 may apply the set sound effect to the call ringtone and output the same when receiving a request for a call connection from the electronic device 100.

According to the various embodiments of the present disclosure, the electronic device obtains data of a desired section in a voice file and uses the same as a notification ringtone, thereby improving usage-convenience of the electronic device.

The methods according to the various embodiments described in the claims or specification of the present disclosure may be implemented by hardware, software, or a combination thereof.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

In addition, the programs may be stored in an attachable storage device that can be accessed by an electronic device through a communication network, such as the Internet, an Intranet, a Local Area Network (LAN), a Wireless LAN (WLAN), a Storage Area Network (SAN), or through a communication network configured by a combination thereof. This storage device may access an electronic device through an external port.

Further, a separate storage device on a communication network may access a portable electronic device.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method for operating an electronic device, the method comprising:
determining (801) voice data from which text data is to be obtained, by selecting a voice data (303) from a list of voice data (301) stored in the memory of the electronic device;
displaying a waveform of the selected voice data and determining (803) whether a first section in the waveform is selected;
if a first section is selected,
displaying a frequency waveform of the selected first section,
converting (805) the selected first section of voice data into text data, and
displaying the text data;
if a first section is not selected, converting (807) the entire voice data into text data; and
displaying the text data;
receiving an input on a position of the displayed text data for selecting a section from among the text data; and
in response to selecting the section of text data, determining (811) a second section of voice data within the first section of voice data corresponding to the selected section of text data, and
setting (813) the determined second section of voice data as a sound to be used by the electronic device.

2. The method of claim 1, further comprising displaying the second section of the voice data when the section of text data is selected.

3. The method of claim 2, wherein the displaying of the second section of the voice data comprises performing marking on the displayed frequency waveform of the voice data.

4. The method of claim 2, wherein the displaying of the second section of the voice data comprises displaying the second section of the voice data through a popup window on a screen configured to display the text data.

5. The method of claim 1, wherein the displaying of the text data comprises displaying the text data and frequency waveforms of the voice data on one screen.

6. The method of claim 5, further comprising performing marking on frequency waveforms of the second section of the voice data when the section of text data is selected.

7. The method of claim 1, wherein the selecting of the section of text data comprises:
determining a start position through a touch gesture;
determining a section through a drag gesture; and
determining an end position through a touch release gesture.

8. The method of claim 1, wherein the selecting of the section of text data comprises outputting the section of text data in a voice format.

9. The method of claim 1, further comprising setting the second section of the voice data as one or more of a call ringtone for the electronic device, a text message notification ringtone, a Social Networking Service, SNS, notification ringtone, and a notification ringtone for the electronic device.

10. The method of claim 1, wherein at least one of the voice data and the text data comprise time stamps connectable between the voice data and the text data.

11. The method of claim 1, wherein the text data is generated by performing conversion of the voice data through at least one of a Speech-To-Text, STT, conversion software comprised in the electronic device and an STT conversion hardware connected to the electronic device.

12. An electronic device comprising:
at least one processor (120);
a memory (110);
at least one program stored in the memory and configured to be executable by the at least one processor;
at least one touchscreen (133) connected to the at least one processor; and
at least one speaker (141) connected to the at least one processor,
wherein the at least one program comprises an instruction for:
determining (801) voice data from which text data is to be obtained, by selecting a voice data (303) from a list of voice data (301) stored in the memory of the electronic device;
displaying a waveform of the selected voice data and determining (803) whether a first section in the waveform is selected;
if a first section is selected,
displaying a frequency waveform of the selected first section,
converting (805) the selected first section of voice data into text data, and
displaying the text data;
if a first section is not selected,
converting (807) the entire voice data into text data; and
displaying the text data;
receiving an input on a position of the displayed text data for selecting a section from among the text data; and
in response to selecting the section of text data, determining (811) a second section of the voice data within the first section of voice data corresponding to the selected section of text data, and
setting (813) the determined second section of voice data as a sound to be used by the electronic device.

13. The electronic device of claim 12, wherein the at least one program comprises an instruction for:
displaying the text data and frequency waveforms of the voice data on one screen; and
performing marking on frequency waveforms of the voice data and displaying the second section of the voice data when the section of text data is selected.

14. The electronic device of claim 12, wherein the at least one program comprises an instruction for setting the second section of the voice data as one or more of a call ringtone for the electronic device, a text message notification ringtone, a Social Networking Service, SNS, notification ringtone, and a notification ringtone for the electronic device.

## Patentansprüche

1. Verfahren zum Betreiben eines elektronischen Gerätes, wobei das Verfahren Folgendes umfasst:
Ermitteln (801) von Sprachdaten, aus denen Textdaten zu erlangen sind, durch Auswählen eines Sprachdatums (303) aus einer Liste von Sprachdaten (301), die im Speicher des elektronischen Gerätes gespeichert ist;
Anzeigen einer Wellenform des ausgewählten Sprachdatums und Ermitteln (803), ob ein erster Abschnitt in der Wellenform ausgewählt ist;
wenn ein erster Abschnitt ausgewählt ist,
Anzeigen einer Frequenz-Wellenform des ausgewählten ersten Abschnitts,
Umwandeln (805) des ausgewählten ersten Abschnitts von Sprachdaten in Textdaten und
Anzeigen der Textdaten;
wenn kein erster Abschnitt ausgewählt ist, Umwandeln (807) der gesamten Sprachdaten in Textdaten und
Anzeigen der Textdaten;
Empfangen einer Eingabe auf einer Position der angezeigten Textdaten zum Auswählen eines Abschnitts unter den Textdaten und
in Reaktion auf Auswählen des Abschnitts von Textdaten Ermitteln (811) eines zweiten Abschnitts von Sprachdaten innerhalb des ersten Abschnitts von Sprachdaten, der dem ausgewählten Abschnitt von Textdaten entspricht, und
Einstellen (813) des ermittelten zweiten Abschnitts von Sprachdaten als einen Ton, der durch das elektronische Gerät zu verwenden ist.

2. Verfahren nach Anspruch 1, das ferner Anzeigen des zweiten Abschnitts der Sprachdaten, wenn der Abschnitt von Textdaten ausgewählt ist, umfasst.

3. Verfahren nach Anspruch 2, wobei das Anzeigen des zweiten Abschnitts der Sprachdaten Durchführen von Markieren auf der angezeigten Frequenz-Wellenform der Sprachdaten umfasst.

4. Verfahren nach Anspruch 2, wobei das Anzeigen des zweiten Abschnitts der Sprachdaten Anzeigen des zweiten Abschnitts der Sprachdaten über ein Aufspringfenster auf einem Bildschirm umfasst, der konfiguriert ist, die Textdaten anzuzeigen.

5. Verfahren nach Anspruch 1, wobei das Anzeigen der Textdaten Anzeigen der Textdaten und Frequenz-Wellenformen der Sprachdaten auf einem Bildschirm umfasst.

6. Verfahren nach Anspruch 5, das ferner Durchführen von Markieren auf Frequenz-Wellenformen des zweiten Abschnitts der Sprachdaten, wenn der Abschnitt von Textdaten ausgewählt ist, umfasst.

7. Verfahren nach Anspruch 1, wobei das Auswählen des Abschnitts von Textdaten Folgendes umfasst:
Ermitteln einer Anfangsposition über eine Berührgeste;
Bestimmen eines Abschnitts über eine Ziehgeste und
Ermitteln einer Endposition über eine Berührfreigabegeste.

8. Verfahren nach Anspruch 1, wobei das Auswählen des Abschnitts von Textdaten Ausgeben des Abschnitts von Textdaten in einem Sprachformat umfasst.

9. Verfahren nach Anspruch 1, das ferner Einstellen des zweiten Abschnitts der Sprachdaten als einen oder mehrere eines Anrufklingeltons für das elektronische Gerät, eines Textmitteilungs-Benachtichtigungsklingeltons, eines Benachtichtigungsklingeltons für Dienste sozialer Netzwerke, Social Networking Service, SNS-Benachtichtigungsklingeltons, und eines Benachtichtigungsklingeltons für das elektronische Gerät umfasst.

10. Verfahren nach Anspruch 1, wobei mindestens eines der Sprachdaten und der Textdaten Zeitmarken umfasst, die zwischen den Sprachdaten und den Textdaten verbindbar sind.

11. Verfahren nach Anspruch 1, wobei die Textdaten durch Durchführen von Umwandlung der Sprachdaten über mindestens eines von einer Sprache-Text-Umwandlungssoftware, Speech-To-Text, STT-Umwandlungssoftware, die im elektronischen Gerät umfasst ist, und einer STT-Umwandlungshardware erzeugt werden, die mit dem elektronischen Gerät verbunden ist.

12. Elektronisches Gerät, das Folgendes umfasst:
mindestens einen Prozessor (120);
einen Speicher (110);
mindestens ein Programm, das im Speicher gespeichert und konfiguriert ist, durch den mindestens einen Prozessor ausführbar zu sein;
mindestens einen Berührbildschirm (133), der mit dem mindestens einen Prozessor verbunden ist; und
mindestens einen Lautsprecher (141), der mit dem mindestens einen Prozessor verbunden ist;
wobei das mindestens eine Programm einen Befehl umfasst zum
Ermitteln (801) von Sprachdaten, aus denen Textdaten zu erlangen sind, durch Auswählen eines Sprachdatums (303) aus einer Liste von Sprachdaten (301), die im Speicher des elektronischen Gerätes gespeichert ist;
Anzeigen einer Wellenform des ausgewählten Sprachdatums und Ermitteln (803), ob ein erster Abschnitt in der Wellenform ausgewählt ist;
wenn ein erster Abschnitt ausgewählt ist,
Anzeigen einer Frequenz-Wellenform des ausgewählten ersten Abschnitts,
Umwandeln (805) des ausgewählten ersten Abschnitts von Sprachdaten in Textdaten und
Anzeigen der Textdaten;
wenn kein erster Abschnitt ausgewählt ist,
Umwandeln (807) der gesamten Sprachdaten in Textdaten und
Anzeigen der Textdaten;
Empfangen einer Eingabe auf einer Position der angezeigten Textdaten zum Auswählen eines Abschnitts unter den Textdaten und
in Reaktion auf Auswählen des Abschnitts von Textdaten Ermitteln (811) eines zweiten Abschnitts der Sprachdaten innerhalb des ersten Abschnitts von Sprachdaten, der dem ausgewählten Abschnitt von Textdaten entspricht, und
Einstellen (813) des ermittelten zweiten Abschnitts von Sprachdaten als einen Ton, der durch das elektronische Gerät zu verwenden ist.

13. Elektronisches Gerät nach Anspruch 12, wobei das mindestens eine Programm einen Befehl umfasst zum
Anzeigen der Textdaten und Frequenz-Wellenformen der Sprachdaten auf einem Bildschirm und
Durchführen von Markieren auf Frequenz-Wellenformen der Sprachdaten und Anzeigen des zweiten Abschnitts der Sprachdaten, wenn der Abschnitt von Textdaten ausgewählt ist.

14. Elektronisches Gerät nach Anspruch 12, wobei das mindestens eine Programm einen Befehl zum Einstellen des zweiten Abschnitts der Sprachdaten als einen oder mehrere eines Anrufklingeltons für das elektronische Gerät, eines Textmitteilungs-Benachtichtigungsklingeltons, eines Benachtichtigungsklingeltons für Dienste sozialer Netzwerke, Social Networking Service, SNS-Benachtichtigungsklingeltons, und eines Benachtichtigungsklingeltons für das elektronische Gerät umfasst.

## Revendications

1. Procédé de fonctionnement d'un dispositif électronique, le procédé comprenant :
la détermination (801) de données vocales à partir desquelles des données de texte doivent être obtenues, par la sélection de données vocales (303) dans une liste de données vocales (301) mémorisées dans la mémoire du dispositif électronique ;
l'affichage d'une forme d'onde des données vocales sélectionnées et la détermination (803) si une première section de la forme d'onde est sélectionnée ;
si une première section est sélectionnée,
l'affichage d'une forme d'onde de fréquence de la première section sélectionnée,
la conversion (805) de la première section sélectionnée de données vocales en données de texte, et
l'affichage des données de texte ;
si une première section n'est pas sélectionnée, la conversion (807) de toutes les données vocales en données de texte, et
l'affichage des données de texte ;
la réception d'une entrée à une position des données de texte affichées pour la sélection d'une section parmi les données de texte ; et
en réponse à la sélection de la section de données de texte, la détermination (811) d'une deuxième section de données vocales à l'intérieur de la première section de données vocales correspondant à la section sélectionnée de données de texte, et
le réglage (813) de la deuxième section déterminée de données vocales en tant qu'un son à utiliser par le dispositif électronique.

2. Procédé selon la revendication 1, comprenant en outre l'affichage de la deuxième section des données vocales lorsque la section de données de texte est sélectionnée.

3. Procédé selon la revendication 2, dans lequel l'affichage de la deuxième section des données vocales comprend l'exécution d'un marquage sur la forme d'onde de fréquence affichée des données vocales.

4. Procédé selon la revendication 2, dans lequel l'affichage de la deuxième section des données vocales comprend l'affichage de la deuxième section des données vocales par l'intermédiaire d'une fenêtre contextuelle sur un écran configuré pour afficher les données de texte.

5. Procédé selon la revendication 1, dans lequel l'affichage des données de texte comprend l'affichage des données de texte et des formes d'onde de fréquences des données vocales sur un écran.

6. Procédé selon la revendication 5, comprenant en outre l'exécution d'un marquage sur des formes d'onde de fréquences de la deuxième section des données vocales lorsque la section de données de texte est sélectionnée.

7. Procédé selon la revendication 1, dans lequel la sélection de la section de données de texte comprend :
la détermination d'une position de début par l'intermédiaire d'un geste de toucher ;
la détermination d'une section par l'intermédiaire d'un geste de glissement ; et
la détermination d'une position de fin par l'intermédiaire d'un geste de relâchement de toucher.

8. Procédé selon la revendication 1, dans lequel la sélection de la section de données de texte comprend la délivrance de la section de données de texte dans un format vocal.

9. Procédé selon la revendication 1, comprenant en outre le réglage de la deuxième section des données vocales en tant qu'une ou plusieurs d'une sonnerie d'appel pour le dispositif électronique, d'une sonnerie de notification de message de texte, d'une sonnerie de notification de service de réseaux sociaux, SNS, et d'une sonnerie de notification pour le dispositif électronique.

10. Procédé selon la revendication 1, dans lequel au moins l'une des données vocales et des données de texte comprend des horodatages pouvant être reliés entre les données vocales et les données de texte.

11. Procédé selon la revendication 1, dans lequel les données de texte sont générées par l'exécution d'une conversion des données vocales par l'intermédiaire d'au moins l'un d'un logiciel de conversion de paroles en texte, STT, compris dans le dispositif électronique et d'un matériel de conversion STT relié au dispositif électronique.

12. Dispositif électronique comprenant :
au moins un processeur (120) ;
une mémoire (110) ;
au moins un programme mémorisé dans la mémoire et configuré pour être exécutable par l'au moins un processeur ;
au moins un écran tactile (133) relié à l'au moins un processeur ; et
au moins un haut-parleur (141) relié à l'au moins un processeur,
dans lequel l'au moins un programme comprend une instruction pour :
la détermination (801) de données vocales à partir desquelles des données de texte doivent être obtenues, par la sélection de données vocales (303) dans une liste de données vocales (301) mémorisées dans la mémoire du dispositif électronique ;
l'affichage d'une forme d'onde des données vocales sélectionnées et la détermination (803) si une première section de la forme d'onde est sélectionnée ;
si une première section est sélectionnée,
l'affichage d'une forme d'onde de fréquence de la première section sélectionnée,
la conversion (805) de la première section sélectionnée de données vocales en données de texte, et
l'affichage des données de texte ;
si une première section n'est pas sélectionnée,
la conversion (807) de toutes les données vocales en données de texte, et
l'affichage des données de texte ;
la réception d'une entrée à une position des données de texte affichées pour la sélection d'une section parmi les données de texte ; et
en réponse à la sélection de la section de données de texte,
la détermination (811) d'une deuxième section de données vocales à l'intérieur de la première section de données vocales correspondant à la section sélectionnée de données de texte, et
le réglage (813) de la deuxième section déterminée de données vocales en tant qu'un son à utiliser par le dispositif électronique.

13. Dispositif électronique selon la revendication 12, dans lequel l'au moins un programme comprend une instruction pour :
l'affichage des données de texte et des formes d'onde de fréquences des données vocales sur un écran ; et
l'exécution d'un marquage sur des formes d'onde de fréquences des données vocales et l'affichage de la deuxième section des données vocales lorsque la section de données de texte est sélectionnée.

14. Dispositif électronique selon la revendication 12, dans lequel l'au moins un programme comprend une instruction pour le réglage de la deuxième section des données vocales en tant qu'une ou plusieurs d'une sonnerie d'appel pour le dispositif électronique, d'une sonnerie de notification de message de texte, d'une sonnerie de notification de service de réseaux sociaux, SNS, et d'une sonnerie de notification pour le dispositif électronique.
